Europäisches Patentamt

European Patent Office

Office européen des brevets

(19)

(11) **EP 1 504 805 A1**

(12) **EUROPEAN PATENT APPLICATION**

(43) Date of publication:
**09.02.2005 Bulletin 2005/06**

(51) Int Cl.⁷: **B01D 53/86**

(21) Application number: **03018011.1**

(22) Date of filing: **07.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Radici Chimica Spa
24121 Bergamo (IT)**

(72) Inventors:
• **Alini, Stefano
27051 Cava Manara (PV) (IT)**

• **Rinaldi, Cinzia
28064 Carpignano Sesia (NO) (IT)**
• **Basile, Francesco
88063 Catanzaro (CZ) (IT)**
• **Vaccari, Angelo
40127 Bologna (BO) (IT)**

(74) Representative: **Banfi, Paolo
Bianchetti Bracco Minoja S.r.l.
Via Plinio, 63
20129 Milano (IT)**

(54) **Catalysts for the Decomposition of Nitrous Oxide**

(57)    The present invention concerns metal oxide catalysts for the conversion of nitrous oxide into gaseous nitrogen and oxygen.

Catalysts contain oxides or mixed oxides of transition metals selected from Cu, Mn, Fe, La and Y, or mixtures thereof, on a support of ceria and zirconia where the metals can assume multiple valency states.

**EP 1 504 805 A1**

## Description

## FILED OF THE INVENTION

The present invention concerns metal oxide catalysts for the conversion of nitrous oxide into gaseous nitrogen and oxygen.

## STATE OF THE ART

Nitrous oxide constitutes the main stratospheric source of NO and is believed to be implicated in the destruction of the ozone layer. Furthermore it has been recognised as a gas which produces the green house effect with a potential 310 times greater than that of $CO_2$ (estimated on a by weight basis and calculated over a period of 100 years).

Nitrous oxide is generated in industrial chemical processes in the production or use of nitric acid. It is estimated that 10% of nitrous oxide released every year into the atmosphere derives from the production of adipic acid; the concentration of nitrous oxide in waste gases from this production ranges generally from 10% to 40% by volume.

It is known from the literature that nitrous oxide can be decomposed according to the following equation:

$$N_2O \rightarrow N_2 + 1/2\ O_2 \qquad \Delta H^\circ = -82\ KJ/mol$$

by means of pure or supported transition metal oxide catalysts. Mixed oxides, which constitute the active phase of the catalyst, are p-type semi-conductors, i.e. wherein there are empty levels close to the valency bands, and which can accept electrons. As the rate determining step is the donation of one electron to the catalyst, p-type semiconductors are preferable to other metallic oxides (J.T. Richardson, Principles of catalyst development, Plenum Press, 1989). However, the use of these metal oxides is limited by problems of sintering, of thermal stability and durability of the catalyst under industrial operating conditions.

Furthermore, it is known that the reaction of decomposition of nitrous oxide, in effluents which contain high concentrations of it, brings about formation of great quantities of oxygen in addition to those present in reagent flows, and thus imposes the use of stable materials in an oxidising environment.

US 5,705,136 discloses a process for the decomposition of nitrous oxide by means of catalysts consisting of oxides of Mn, Fe, Co, Ni, Cu, Zn or mixtures thereof, supported upon a metal oxide selected from MgO, CaO, ZnO, $TiO_2$, $MoO_3$-CoO-$Al_2O_3$, ZnO-$Al_2O_3$, $TiO_2$-MgO, $TiO_2$-$Al_2O_3$, $TiO_2$-ZnO, MgO-CuO and MgO-NiO or mixtures thereof.

US 5,314,673 discloses a process for the decomposition of nitrous oxide using catalysts consisting essentially of nickel oxide, cobalt oxide on a zirconia substrate; it is known however that pure zirconia does not possess high thermal stability when exposed for long periods to high temperatures.

WO 00/51715 discloses a process for the decomposition of nitrous oxide using catalysts consisting of iron supported on zirconia, and optionally at least one metal selected from Co, Ni, Rh, Pd, Ir, Pt, Mn, La and Ce. The procedure for preparing these catalysts is rather complicated and disadvantages associated with the low degree of thermal stability of zirconia remain.

WO 02/02230 discloses catalysts based on mixed oxides of formula $Co_{3-x}M_xO_4$, wherein M is Fe or Al and X is between 0 and 2, supported on ceria with the possible addition of zirconia in quantities between 0.01 and 2% by weight.

The problem of thermal stability of the support can be overcome using mixtures of ceria and zirconia as disclosed in J. Mol. Catalysis A: Chemical 139 (1999) 55-62, wherein the active phase of the catalyst consists of metallic Rh in quantities of 1% by weight. Notwithstanding the fact that Rh is extremely efficient in the decomposition of nitrous oxide, it has costs which are so high as to render the process range expensive. The same may be said of all precious metals.

An increase in thermal stability can be obtained using mixed oxides with perovskite structure as disclosed in US 5,562,888 and in Catal. Reby volume - Sci. Eng., 34 (4), (1992) 409-425. However, it is known that one of the greatest obstacles to applying the perovskites is their low surface area; notwithstanding the existence of various methods for the preparation of this type of material, surface areas range from 5 to 20 $m^2/g$.

There is therefore a need to develop catalysts for the decomposition of nitrous oxide containing readily-available, non toxic and non precious materials, and which are simple to prepare, long lasting and which do not create problems in disposal after use.

## DETAILED DESCRIPTION OF THE INVENTION

It has now been found that oxides and mixed oxides of transition metals selected from Cu, Mn, Fe, La and Y, and mixtures thereof, on a ceria and zirconia support catalyse the decomposition of nitrous oxide very efficiently allowing the above mentioned disadvantages to be overcome.

The invention therefore concerns catalysts for the decomposition of nitrous oxide consisting of oxides or mixed oxides of transition metals selected from Cu, Mn, Fe, La and Y, or mixtures thereof, on a ceria and zirconia support, wherein the metals can assume multiple valency states.

The weight percentage of oxides, mixed oxides or mixtures thereof in the catalyst ranges from 0.5 to 50%, preferably from 1 to 15%.

According to a preferred embodiment of the invention, the catalyst consists of a mixture of mixed oxides of copper and manganese where the weight percentage expressed as CuO ranges from 1 to 5% and the weight percentage expressed as MnO ranges from 2 to 10%.

Furthermore, Ca or Ba can be added to the catalyst in quantities ranging from 0,5 to 10% by weight, in order to further improve thermal stability.

According to a further embodiment of the invention, the mixed oxides are in perovskitic form.

The molar ratio Ce/Zr in the support ranges preferably from 9/1 to 1/9, more preferably from 7/3 to 3/7. The support may be in powder, extruded, tablets or monolithic structure; in the case of extruded or tablets the diameter is preferably between 1 and 10 mm, and more preferably between 2 and 5 mm. If the support is in the form of an extruded or tablets, it preferably contains alumina up to 10% by weight.

Catalysts according to the present invention may be prepared by impregnation of the support with a solution of soluble salts of Cu, Mn, Fe, La or Y and optionally Ba and Ca, selected from nitrates, carbonates, acetates and formates, preferably nitrates, followed by drying at 100-120°C and calcination at a temperature ranging from 400 to 900°C, preferably from 500 to 800°C. Calcination time may range from 3 to 24 hours, preferably from 5 to 10 hours. The preferred method of impregnations is dry impregnations using a quantity of solution equal to or less than the volume of the pores of the support.

Catalysts according to the present invention may be used to decompose nitrous oxide present in effluent gaseous mixtures from industrial processes, in particular from processes of production of adipic acid or production of nitric acid.

The invention therefore concerns also a process for the decomposition of nitrous oxide present in effluent gaseous mixtures from industrial processes including contacting a gaseous mixture with a catalyst according to the invention.

The process is preferably performed in fixed bed reactors using the catalyst in extruded or pellet form at temperatures ranging from 300 to 1000°C, preferably from 400 to 800°C and at pressure from 0.1 to 100 atmospheres, preferably between 0.1 and 20 atmospheres. The gas hourly space velocity ranges from 3000 to 300000 $h^{-1}$, preferably from 5000 to 50000 $h^{-1}$.

Catalysts according to the present invention allow in particular reduction in the concentration of nitrous oxide present in the effluent gases from the production of adipic acid to levels lower than 500 ppm and, as can be noted from the examples that follow, also below 200 ppm. They have high thermal stability and catalyst activity remains unaltered for prolonged periods of time, even in the presence of appreciable quantities of higher nitrogen oxides, volatile organic substances, water and oxygen in the gaseous mixture. The high thermal stability of the catalyst allows support of the exothermia of the reaction and to exploit this latter to self-sustain the reaction on the catalyst bed.

Compared with catalyst containing precious metals, the catalysts of the present invention have greater resistance to sintering in addition to being of substantially lower cost.

The invention will now be illustrated in more detail by means of the following examples.

## EXAMPLES

### Analytical methods

Gas analysis was performed using a gas chromatograph with a thermoconducibility detector. In order to enhance analysis reproducibility, a sampling system with pneumatic valves was used. Nitrous oxide and carbon dioxide were separated from the nitrogen/oxygen mixture through a *Poropack* Q column [160-180 μm (80/100 mesh), length 1.83 m (6 ft), e.d. 3.175 mm (1/8")]. Oxygen was separated from nitrogen through a 13X molecular sieve column [250-355 μm (45/60 mesh), length 1.219 m (4 ft), e.d. 3.175 mm (1/8")] placed after the first column. Oven temperature for the gas chromatograph was programmed from 40 to 155°C and the flow-rate of the carrier was 30 cc/min.

### IMPREGNATION OF CATALYST

### Example 1

The impregnation of 8 g of an extruded of ceria/zirconia ($CeO_2$ 67.5% by weight, $ZrO_2$ 22.5% by weight, $Al_2O_3$ 10% by weight) was obtained considering that the pore volume is 0.5 ml/g.

8.4 g of catalyst containing 5% of a mixture of copper (II) and manganese (II) oxides have been prepared by two consecutive impregnations 4 ml each with a solution containing 0.96 g of $Mn(NO_3)_2*6H_2O$ and 0.53 g of $Cu(NO_3)_2*3H_2O$.

After each impregnation the catalyst was dried in oven at 120°C for 30 min., then calcined at 700°C for 5 h.

### Example 2

Using 8 g of an extruded of ceria/zirconia ($CeO_2$ 67.5% by weight, $ZrO_2$ 22.5% by weight, $Al_2O_3$ 10% by weight), 8.8 g of catalyst containing 10% of a mixture of copper (II) and manganese (II) oxides have been prepared by two consecutive impregnations 4 ml each with a solution containing 1.92 g of $Mn(NO_3)_2*6H_2O$ and 1.06 g of $Cu(NO_3)_2*3H_2O$.

After each impregnation the catalyst was dried in oven at 120°C for 30 min., then calcined at 700°C for 5 h.

## Example 3

Using 4 g of an extruded of ceria/zirconia ($CeO_2$ 67.5% by weight, $ZrO_2$ 22.5% by weight, $Al_2O_3$ 10% by weight), 4.12 g of catalyst containing 3% of manganese (II) oxide have been prepared by two consecutive impregnations 2 ml each with a solution containing 0.48 g of $Mn(NO_3)_2*6H_2O$.
After each impregnation the catalyst was dried in oven at 120°C for 30 min., then calcined at 700°C for 5 h.

## Example 4

Using 4 g of an extruded of ceria/zirconia ($CeO_2$ 67.5% by weight, $ZrO_2$ 22.5% by weight, $Al_2O_3$ 10% by weight), 4.088 g of catalyst containing 2.2% of copper (II) oxide have been prepared by two consecutive impregnations 2 ml each with a solution containing 0.27 g of $Cu(NO_3)_2*3H_2O$.
After each impregnation the catalyst was dried in oven at 120°C for 30 min., then calcined at 700°C for 5 h.

## Example 5

The impregnation of 8 g of ceria/zirconia ($CeO_2$ 74.6% by weight, $ZrO_2$ 25.4% by weight) was obtained considering that the pore volume is 0.5 ml/g.
8.8 g of catalyst containing 10% of a mixture of calcium, copper (II) and manganese (II) oxides have been prepared by two consecutive impregnations 4 ml each with a solution containing 1.303 g Ca $(NO_3)_2$ 4*$H_2O$, 0.96 g of $Mn(NO_3)_2*6H_2O$ and 0.53 g of Cu $(NO_3)_2*3H_2O$.
After each impregnation the catalyst was dried in oven at 120°C for 30 min, then calcined at 700°C for 5 h.

## Example 6

The impregnation of 8 g of ceria/zirconia ($CeO_2$ 74.6% by weight, $ZrO_2$ 25.4% by weight) was obtained considering that the pore volume is 0.5 ml/g. 8.9 g of catalyst containing 10% of a mixture of lanthanum, copper (II) and manganese (II) oxides have been prepared by two consecutive impregnations 4 ml each with a solution containing 0.61 g of $La(NO_3)_3*6H_2O$, 0.96 g of $Mn(NO_3)_2*6H_2O$ and 0.53 g of $Cu(NO_3)_2*3H_2O$.
After each impregnation the catalyst was dried in oven at 120°C for 30 min., then calcined at 700°C for 5 h.

## PEROVSKITE TYPE CATALYST

### Example 7

The impregnation of 8 g of $CeO_2/ZrO_2$ was ob-tained considering that the pore volume is 0.5 ml/g.
To obtain 8.8 g of catalyst containig about 10% weight of perovskite Ca/Mn/Cu (1/0.6/0.4 as atomic ratio) by two consecutive impregnations 4 ml each, a solution was prepared dissolving 1.30 g of Ca $(NO_3)_2*4H_2O$, 0.96 g of $Mn(NO_3)_2*6H_2O$ and 0.53 g of $Cu(NO_3)_2*3H_2O$ in 4 ml of distilled water at room temperature (solution A).
A second solution was prepared dissolving 2.08 g of citric acid in 4 ml of distilled water at room temperature (solution B).
At room temperature and under stirring, the solution A was dropped into the solution B in about 30 min., obtaining a new solution (solution C). Solution C was used for the two consecutive impregnations of 8 g of support $CeO_2/ZrO_2$.
After each impregnation the catalyst was dried in oven at 90°C for 30 min. and then at 180°C overnight obtaining a precursor that was finally calcined at 700°C for 5 h.

## DECOMPOSITION OF NITROUS OXIDE ON CATALYSTS SUPPORTED ON CERIA/ZIRCONIA

The following general procedure has been used to destroy nitrous oxide in gaseous nitrogen and oxygen using catalysts disclosed in the previous examples.
The reactor was a tube in stainless steel AISI 316 with an internal diameter of 8 mm and 700 mm high. The catalyst was placed inside the tube at about its halfway point. The charge of catalyst generally used was around 1-2 ml. The reactor was placed in a tubular oven that was able to operate at 100 to 1100°C. The temperature of the oven was adjustable by means of a control panel. A thermocouple placed inside the reactor in contact with the catalyst indicated the actual temperature of the catalyst bed.
The concentration of nitrous oxide was within the range of 10 to 30% by volume. The concentration of oxygen was around 8-12% by volume, water was present up to a concentration of 2% by volume, the concentration of $CO_2$ reached 2-3% by volume, the rest being nitrogen. The gaseous mixture came from the off-gases of an adipic acid plant.
The experiments in the decomposition of nitrous oxide were carried out with a gas flow within the range of 20 to 100 l/h, and with a gas hourly space velocity (GHSV) ranging from 5000 to 50000 $h^{-1}$. The reaction was studied in a range of temperatures from 450 to 800°C.

## Example 8

The catalyst prepared according to example 1 (3.35 g) was introduced into the tubular reactor and heated to a temperature of 450°C in a flow of off-gases of the plant at 35 l/h, which corresponds to a GHSV of

around 22100 h$^{-1}$. The conversion was monitored raising the temperature by 50°C at a time until complete destruction of nitrous oxide was achieved. At a temperature of 600°C analysis of gases exiting from the reactor confirm practically complete decomposition of nitrous oxide (<100 ppm). Conversion >99.9%. The catalyst was tested for 170 h.

## Example 9

The catalyst prepared according to example 2 (3.35 g) was introduced into the tubular reactor and heated to a temperature of 450°C in a flow of off-gases of the plant at 35 l/h, which corresponds to a GHSV of around 22100 h$^{-1}$. The conversion was monitored raising the temperature by 50°C at a time until complete destruction of nitrous oxide was achieved. At a temperature of 650°C analysis of gases exiting from the reactor confirm practically complete decomposition of nitrous oxide (300 ppm). Conversion >99.9%.

## Example 10

The catalyst prepared according to example 3 (3.35 g) was introduced into the tubular reactor and heated to a temperature of 450°C in a flow of off-gases of the plant at 35 l/h, which corresponds to a GHSV of around 22100 h$^{-1}$. The conversion was monitored raising the temperature by 50°C at a time until complete destruction of nitrous oxide was achieved. At a temperature of 600°C analysis of gases exiting from the reactor confirm practically complete decomposition of nitrous oxide (134 ppm). Conversion >99.9%. The catalyst was tested for 250 h.

## Example 11

The catalyst prepared according to example 4 (3.35 g) was introduced into the tubular reactor and heated to a temperature of 450°C in a flow of off-gases of the plant at 35 l/h, which corresponds to a GHSV of around 22100 h$^{-1}$. The conversion was monitored raising the temperature by 50°C at a time until complete destruction of nitrous oxide was achieved. At a temperature of 600°C analysis of gases exiting from the reactor confirm practically complete decomposition of nitrous oxide (64 ppm). Conversion >99.9%. The catalyst was tested for 170 h.

## Example 12

The catalyst prepared according to example 5 (3.35 g) was introduced into the tubular reactor and heated to a temperature of 450°C in a flow of off-gases of the plant at 35 l/h, which corresponds to a GHSV of around 22100 h$^{-1}$. The conversion was monitored raising the temperature until complete destruction of nitrous oxide was achieved. At a temperature of 570°C analysis of gases exiting from the reactor confirm practically complete decomposition of nitrous oxide (400 ppm). Conversion = 99.8%. The catalyst was tested for 140 h.

## Example 13

The catalyst prepared according to example 6 (5.15 g) was introduced into the tubular reactor and heated to a temperature of 450°C in a flow of off-gases of the plant at 35 l/h, which corresponds to a GHSV of around 22100 h$^{-1}$. The conversion was monitored raising the temperature until complete destruction of nitrous oxide was achieved. At a temperature of 650°C analysis of gases exiting from the reactor confirm practically complete decomposition of nitrous oxide (95 ppm). Conversion >99.9%.

## Example 14

The catalyst prepared according to example 7 (1.61 g) was introduced into the tubular reactor and heated to a temperature of 400°C in a flow of off-gases of the plant at 20 l/h, which corresponds to a GHSV of around 25000 h$^{-1}$. The conversion was monitored raising the temperature by 50°C at a time to 650°C and then 10°C at a time until complete destruction of nitrous oxide was achieved. At a temperature of 700°C analysis of gases exiting from the reactor confirm practically complete decomposition of nitrous oxide (80 ppm). Conversion >99.9%.

## Claims

1. Catalysts for the decomposition of nitrous oxide consisting of oxides or mixed oxides of transition metal selected from Cu, Mn, Fe, La and Y, wherein the metals can assume multiple valency states, or mixtures thereof, **characterised in that** said oxides, mixed oxides or mixtures thereof are supported on ceria and zirconia.

2. Catalysts according to claim 1, **characterised in that** the oxides are in a perovskitic form.

3. Catalysts according to claim 1 or 2, **characterised in that** the weight percentage of oxide, mixed oxide or mixtures thereof ranges from 0.5 to 50%.

4. Catalysts according to claim 1 consisting of a mixture of mixed oxides of copper and of manganese wherein the weight percentage expressed as CuO ranges from 1 to 5% and the weight percentage expressed as MnO ranges from 2 to 10%.

5. Catalysts according to any one of claims 1 to 4 **characterised in that** they also contain CaO and BaO in quantities up to 10% by weight.

**6.** Catalysts according to any one of claims 1 to 5 **characterised in that** the molar ratio Ce/Zr in the support ranges from 9/1 to 1/9.

**7.** Catalysts according to any one of claims 1 to 6 **characterised in that** the ceria and zirconia support is in powder, extruded form, tablet, or structured in monolith.

**8.** Use of catalysts as claimed in any one of claims 1 to 7 for the decomposition of nitrous oxide.

**9.** Process for the decomposition of nitrous oxide from gaseous mixtures comprising contacting a gaseous mixture with a catalyst of any one of claims 1 to 7.

**10.** Process according to claim 9 **characterised in that** the gaseous mixture is an effluent gas from the production of adipic acid or nitric acid.

**11.** Process according to claim 9 or 10 **characterised in that** it is performed at a temperature from 300 to 1000°C.

**12.** Process according to any one of claims 9 to 11 **characterised in that** it is performed at a pressure from 0.1 to 100 atm.

**13.** Process according to any one of claims 9 to 12 **characterised in that** the gas hourly space velocity of the gaseous mixture ranges from 3000 to 300000 $h^{-1}$.

European Patent Office

**EUROPEAN SEARCH REPORT**

Application Number

EP 03 01 8011

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 927 799 A (ISOGAI AKIO ET AL) 22 May 1990 (1990-05-22) | 1-3,6,7 | B01D53/86 |
| Y | * column 3, line 4 - line 13; claims 1,3 * * table 9 * | 8,9 | |
| X | US 6 548 032 B1 (HEDOUIN CATHERINE ET AL) 15 April 2003 (2003-04-15) * claim 1 * | 1 | |
| Y | WO 00 51715 A (DU PONT ;VERNOOY PAUL DOUGLAS (US)) 8 September 2000 (2000-09-08) * claim 1 * | 8,9 | |
| A | EP 1 035 074 A (DAIICHI KIGENSO KAGAKU CO LTD) 13 September 2000 (2000-09-13) * claim 1 * | 1,2 | |

TECHNICAL FIELDS SEARCHED (Int.Cl.7)

B01D

The present search report has been drawn up for all claims

| Place of search | Date of completion of the search | Examiner |
|---|---|---|
| THE HAGUE | 9 January 2004 | Faria, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 03 01 8011

This annex lists the patent family members relating to the patent documents cited in the above–mentioned European search report.
The members are as contained in the European Patent Office EDP file on
The European Patent Office is in no way liable for these particulars which are merely given for the purpose of information.

09-01-2004

| Patent document cited in search report | | Publication date | Patent family member(s) | | Publication date |
|---|---|---|---|---|---|
| US 4927799 | A | 22-05-1990 | JP | 6075675 B | 28-09-1994 |
| | | | JP | 63116741 A | 21-05-1988 |
| | | | JP | 1881751 C | 21-10-1994 |
| | | | JP | 5082258 B | 18-11-1993 |
| | | | JP | 63116742 A | 21-05-1988 |
| | | | AU | 595655 B2 | 05-04-1990 |
| | | | AU | 8062087 A | 26-05-1988 |
| | | | DE | 3737419 A1 | 19-05-1988 |
| US 6548032 | B1 | 15-04-2003 | FR | 2738756 A1 | 21-03-1997 |
| | | | AT | 210490 T | 15-12-2001 |
| | | | AU | 7088196 A | 09-04-1997 |
| | | | BR | 9610631 A | 16-03-1999 |
| | | | CA | 2230714 A1 | 27-03-1997 |
| | | | CN | 1200053 A | 25-11-1998 |
| | | | DE | 69617993 D1 | 24-01-2002 |
| | | | DE | 69617993 T2 | 18-07-2002 |
| | | | EP | 0861116 A1 | 02-09-1998 |
| | | | ES | 2169812 T3 | 16-07-2002 |
| | | | WO | 9710892 A1 | 27-03-1997 |
| | | | JP | 11500354 T | 12-01-1999 |
| | | | JP | 3345426 B2 | 18-11-2002 |
| WO 0051715 | A | 08-09-2000 | CA | 2360492 A1 | 08-09-2000 |
| | | | CN | 1344178 T | 10-04-2002 |
| | | | DE | 60001387 D1 | 20-03-2003 |
| | | | DE | 60001387 T2 | 27-11-2003 |
| | | | EP | 1159057 A1 | 05-12-2001 |
| | | | JP | 2002537970 A | 12-11-2002 |
| | | | WO | 0051715 A1 | 08-09-2000 |
| | | | US | 6379640 B1 | 30-04-2002 |
| | | | US | 6429168 B1 | 06-08-2002 |
| EP 1035074 | A | 13-09-2000 | EP | 1035074 A1 | 13-09-2000 |
| | | | JP | 2000319019 A | 21-11-2000 |
| | | | US | 6255242 B1 | 03-07-2001 |

EPO FORM P0459

For more details about this annex : see Official Journal of the European Patent Office, No. 12/82